## Europäisches Patentamt
## European Patent Office
## Office européen des brevets

(19)

(11) Veröffentlichungsnummer: **0 053 290**
**B1**

(12)

# EUROPÄISCHE PATENTSCHRIFT

(45) Veröffentlichungstag der Patentschrift:
**31.07.85**

(51) Int. Cl.⁴: **F 16 K 47/04,** F 16 L 55/02

(21) Anmeldenummer: **81109299.8**

(22) Anmeldetag: **29.10.81**

(54) **Ausströmstufe für Drosselventil.**

(30) Priorität: **29.11.80 DE 3045075**

(43) Veröffentlichungstag der Anmeldung:
**09.06.82 Patentblatt 82/23**

(45) Bekanntmachung des Hinweises auf die Patenterteilung:
**31.07.85 Patentblatt 85/31**

(84) Benannte Vertragsstaaten:
**AT CH FR GB IT LI SE**

(56) Entgegenhaltungen:
**DE - A - 2 209 230**

(73) Patentinhaber: **Welland & Tuxhorn, Gütersloher Strasse 257, D-4800 Bielefeld 14 (DE)**

(72) Erfinder: **Sass, Jochen, Dipl.-Ing., Marienfelder Strasse 69, D-4800 Bielefeld 14 (DE)**
Erfinder: **von Nordheim, Günther, Dr.-Ing., Enniskillener Strasse 107, D-4800 Bielefeld 14 (DE)**
Erfinder: **Schattenhofer, Johann, Dipl.-Ing., Maronenweg 35, D-8520 Erlangen (DE)**

(74) Vertreter: **Meldau, Gustav, Dipl.-Ing., Vennstrasse 9, D-4830 Gütersloh 1 (DE)**

## Beschreibung

Die Erfindung liegt auf dem Gebiet der Drosselorgane für strömende Fluide; sie betrifft eine Ausströmstufe mit axialer Zu- und radialer Abströmung für ein Drosselventil, insbesondere für ein Druckreduzierventil.

Drosselorgane haben die Aufgabe, den Druck strömender Fluide herabzusetzen. Sollte gerade die Herabsetzung des Fluid-Druckes geregelt werden oder muß das Drosselorgan variable Durchflüsse verarbeiten, wird es regelbar ausgebildet. Zu Regelzwecken wird dabei häufig ein im Drosselorgan angeordneter Drosselkörper mit axialer Hubbewegung eingesetzt, bei dem die Strömung des ausströmenden Fluids in einer mit Drosselöffnungen versehenen Beruhigungslochdrossel ausgerichtet wird. Eine derartige Drosselvorrichtung gemäß dem Oberbegriff des Anspruchs 1 ist in der DE-A-2 209 230 beschrieben. Das in der mehrstufigen Drosselschiebersäule entspannte Fluid strömt durch Überströmöffnungen in eine Ringkammer mit keilförmigem Querschnitt und von da aus weiter durch eine feste Lochdrossel mit einem Querschnitt entgegengesetzt zur Keilform der Ringkammer in den Abströmkanal der Drosselvorrichtung. Hier nimmt die Ausströmstufe nicht am Regelvorgang teil. Bei derartigen Einrichtungen ist es unvermeidbar, daß vor der Beruhigungslochdrossel in ihr oder im Abströmraum Strömungsablösungen oder Strahlturbulenzen auftreten und bei Fluiden nahe ihrem Siedepunkt Kavitationserscheinungen mit den gefürchteten oftmals zu einer Beschädigung der Lochdrosseleinrichtung führenden Folgen einsetzen. Zu diesen Folgen gehören auch erhebliche Geräuschentwicklungen.

Der Erfindung liegt nunmehr die Aufgabe zugrunde eine Ausströmstufe anzugeben, die, einem durch eine axiale Hubbewegung eines Drosselschiebers regelbaren Drosselorgan nachgeschaltet, unter Ausnutzung der Hubbewegung des Drosselschiebers selbst regelbar ist und dabei unerwünschte Strömungsablösungen oder Strahlturbulenzen und — bei Fluiden nahe ihrem Siedepunkt — gefährliche Kavitationen vermeidet, die durch ein strömungsbegünstigtes Abströmen betriebssicher einsetzbar ist, die wirtschaftlich herstellbar ist und bei der der Wartungsaufwand gering gehalten werden kann.

Nach der Erfindung wird diese Aufgabe dadurch gelöst, daß in der Wandung der Steuerbuchse nahe dem mit einer Bodenplatte verschlossenen, abströmseitigen Ende zwei etwa gleich große, durch einen Zwischenring voneinander getrennte, zylinderringförmige Ausströmkammern vorgesehen sind, deren Außenwandungen als an sich bekannte abströmseitige Beruhigungs-Lochdrosseln ausgebildet sind, wobei die Innenwandung der stromaufwärtigen Ausströmkammer nach innen der Hubhöhe entsprechend geöffnet ist und wobei die Innenwandung der stromabwärtigen Ausströmkammer mit einer der Hubhöhe entsprechenden Ausström-Lochdrossel versehen ist und daß das abströmseitige Ende des Drosselschiebers mit einem eine zuströmseitig angeordnete Überström-Lochdrossel aufweisenden Hohlzylinder verlängert, ein hohlzylindrisches Drosselorgan bildet, das an seinem offenen Ende einen der Hubhöhe entsprechenden Abstand eine der der ersten Ausström-Lochdrossel entsprechende zweite Ausström-Lochdrossel aufweist, derart, daß bei axialer Verschiebung des Drosselschiebers in Offenstellung die zweite Ausström-Lochdrossel des Drosselorgans den Einlaß für die stromaufwärtige Ausströmkammer bildet und die Unterkante des freien Endes des Drosselorgans die erste Ausström-Lochdrossel der stromabwärtigen Ausströmkammer freigibt, wobei die innenliegende Oberkante des Zwischenrings und die untenliegende Außenkante des Drosselorgans die Steuerkanten dafür bilden.

Weitere Ausgestaltungen sind in den Unteransprüchen beschrieben.

Das Wesen der Neuerung wird beispielhaft an einer Ausströmstufe in Verbindung mit einem Druckreduzierventil mit Drosselschiebersäule dargestellt; dabei zeigt

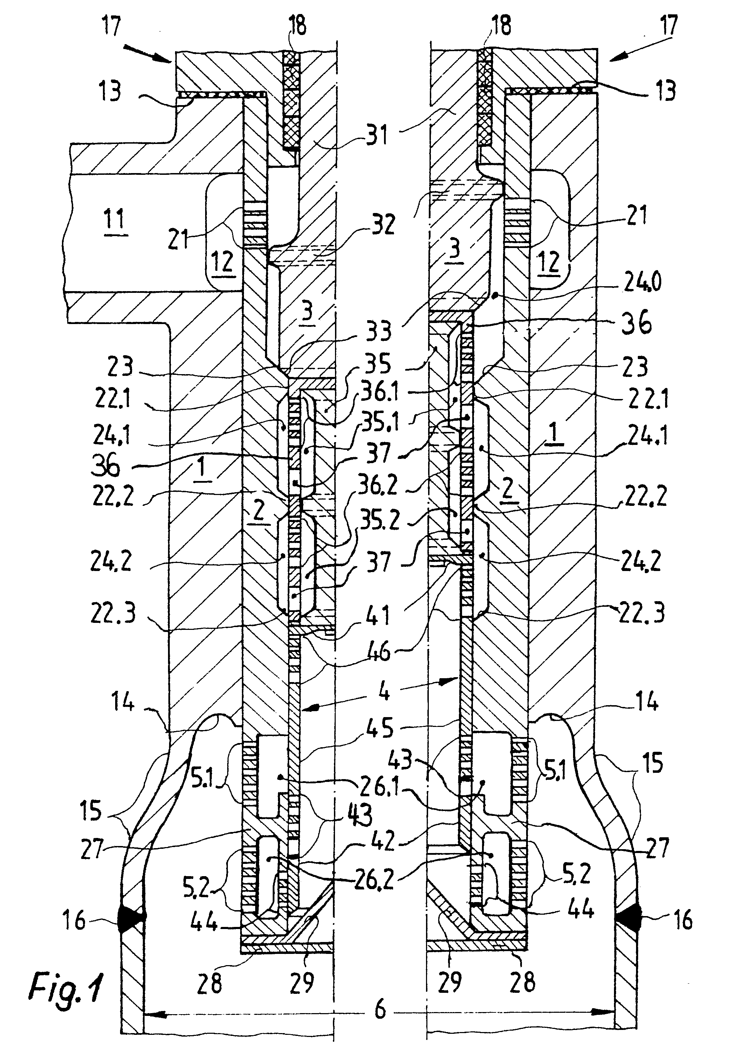

Fig. 1 einen schematischen Schnitt durch ein Druckreduzierventil mit mehreren Stufen und der nachgeschalteten Ausströmstufe. In der gewählten Darstellung wurde die Mittellinie zur deutlichen Darstellung dieser beiden Ventilstellungen aufgetrennt.

Das Ventil besteht aus einem Ventilaußengehäuse 1 mit einem seitlichen Einströmstutzen 11, der in eine Ringkammer 12 übergeht; es ist mit dem Verschlußstück 17 nach oben verschlossen, wobei eine übliche Dichtung 13 zwischen dem Verschlußstück und dem Ventilgehäuse 1 angeordnet ist. Durch das Verschlußstück 17 führt der Schaft 31 des Drosselschiebers 3 und verbindet ihn mit einem nicht näher dargestellten Antrieb, der die Hubbewegung des Drosselschiebers 3 bewirkt, wobei die Abdichtung zwischen dem Schaft 31 und dem Verschlußstück 17 in üblicher Weise von der Packung 18 gebildet wird. Im Ventilgehäuse 1 ist eine Steuerbuchse 2 angeordnet, in deren Innenwand zylindrische Ausnehmungen 24.0 bis 24.2 vorgesehen sind, die periphere Überströmkammern bilden, und zwar für die Einströmstufe 24.0, für die erste Stufe 24.1 und für die zweite Stufe 24.2. Diese peripheren Überströmkammern 24.0, 24.1 und 24.2 werden voneinander durch Steuerkanten mit daran anschließenden Überdeckungslängen 22 getrennt, wobei die Steuerkante mit Überdeckungslänge 22.1 die Einströmstufe von der ersten und die Steuerkante mit Überdeckungslänge 22.2 die erste von der zweiten Stufe trennt. Die letzte periphere Überströmkammer 24.2 endet an der Steuerkante 22.3. Stromabwärts dieser Steuerkante 22.3 geht die Steuerbuchse 2, sofern das Ventil mit einer geregelten Ausströmstufe nach der Erfindung versehen ist, in eine Führungsbuchse über, in der ein mit dem Drosselschieber 3 verbundenes hohlzylindrisches Drosselorgan 4 axial verschiebbar gelagert ist und an deren mit der Bodenplatte 28 verschlossenem abströmseitigen Ende zylinderförmige, Ausströmkammern 26.1 und 26.2 bildende Aussparungen vorgesehen sind. Die Flanke der die Einströmstufe und die erste Stufe trennenden Steuerkante mit Überdeckungslänge 22.1 trägt gleichzeitig den kegelförmigen Ventilsitz 23 für den Dichtkegel 33. Dieser Dichtkegel ist Bestandteil des im Inneren der Steuerbuchse 2 axial bewegbaren Drosselschiebers 3, der über den Schaft 31 mit dem nicht dargestellten Ventilstellantrieb verbunden ist. Stromaufwärts vom Dichtsitz, im Bereich der geregelten Einströmlochdrossel 12 befindet sich ein Dichtkolben 32; stromabwärts des Dichtkegels 33 geht der Drosselschieber 3 in eine von einer Drosselsäulenbuchse 36 umgebenen, mit zylinderringförmigen Ringkammern 35.1 und 35.2 bildenden Aussparungen versehenen Drosselschiebersäule 35 über, die auch aus mehreren Säulenstücken gebildet sein kann. Dabei entspricht die Anzahl der Ringkammern der Anzahl der Stufen; somit ist auch die Anzahl der dazugehörigen peripheren Überströmkammern festgelegt.

Das durch die regelbare Einströmlochdrossel 21 aus der Ringkammer 12 in die erste periphere Überströmkammer 24.0 übertretende Fluid wird bei gesperrtem Ventil — der Dichtkegel 33 sitzt im Dichtsitz 23 — am Strömen gehindert. Dabei wirkt der gesamte Druck über den Dichtkolben 32 positiv auf den Ventilsitz und unterstützt die Schließkräfte. Bei geöffnetem Ventil strömt das Fluid durch die Einströmlochdrossel 21 in die erste periphere Überströmkammer 24.0 in der Innenwand der Steuerbuchse 2 und kann, geleitet durch die Steuerkante 21.1, durch die Lochdrossel 36.1 der ersten Stufe in die Ringkammer 35.1 dieser Stufe übertreten, aus der es durch die Rückströmöffnung 37 in die nächste periphere Überströmkammer 24.1 zwischen der ersten und der zweiten Stufe gelangt. Dieses Durchströmen wiederholt sich in gleicher Weise in der zweiten und in jeder folgenden Stufe, soweit der Drosselschieber 3 mit Stufen versehen ist.

Das hohlzylindrische Drosselorgan 4 der Ausströmstufe schließt sich an den Drosselschieber 3 an, wobei ein Hohlzylinder 45, der die Drosselsäulenbuchse 36 fortsetzt, mit seiner Grundplatte 41 an dem letzten am abströmseitigen Ende des Drosselkörpers 33 angeordneten Zentralstück 35 befestigt ist; es versteht sich von selbst, daß auch eine entsprechend verlängerte Drosselsäulenbuchse den gleichen Zweck erfüllt. Dieser Hohlzylinder 45 ist zuströmseitig mit einem mit der Steuerkante 23.3 zusammenwirkenden und von ihr geregelten zuströmseitigen Überström-Lochbereich 46 versehen, der — bei geöffneten Ventil — die Strömung in das Innere des Hohlzylinders 45 freigibt. Das in den Innenraum des Hohlzylinders 45 übergetretene Fluid strömt nun zunächst in axialer Richtung durch den Hohlzylinder 45 bis in Höhe der geregelten Ausström-Lochdrosseln 43 und 44, je eine im Bereich der in der verlängerten Steuerbuchse 2 angeordneten Ausströmkammern 26.1 und 26.2, durch die es dann radial abströmt. Die beiden Ausströmkammern 26.1 und 26.2 sind durch einen Zwischenring voneinander getrennt und weisen zur Abströmseite hin Ausström-Beruhigungsdrosseln 5.1 und 5.2 auf. Das im Hohlzylinder 45 strömende Fluid tritt — je nach Öffnungsgrad des Ventils — durch die mehr oder weniger geöffnete erste Ausström-Lochdrossel 43 in die stromaufwärtige Ausströmkammer 26.1 bzw. durch die zweite Ausström-Lochdrossel 44 in die stromabwärtige Ausströmkammer 26.2 über. Dabei bildet die Oberkante des Zwischenrings die Steuerkante für die erste Ausström-Lochdrossel 43 und die Unterkante des freien Endes 42 des Hohlzylinders 45 die Steuerkante für die zweite Ausström-Lochdrossel 44. Sind die Ausström-Lochdrosseln 43 und 44 mit progressiv ansteigenden Lochdurchmessern versehen, sind die Richtungen der Durchmesserzunahme in beiden Lochdrosselbereichen einander entgegengesetzt. Durch diese Maßnahme wird der Fluidstrom unabhängig vom Öffnungsgrad des Ventils in zwei etwa gleich große Teilströme aufgeteilt, wobei die Teilströme nach Durchströmen der Ausströmkammern 26.1 und 26.2 durch die Ausström-Beruhigungsdrosseln 5.1 und 5.2 austreten, sich vereinigen und schließlich durch den Abströmstutzen 6 abströmen. Eine am abströmseitigen Ende des Ventilgehäuses 1 angeordnete, umlaufende Rinne leitet die Strömung aus der stromaufwärtigen Ausström-Beruhigungsdrossel 5.1 zur Außenwand des Stutzens, wobei das Zuströmen durch die stromabwärtige Ausström-Beruhigungsdrossel 5.2 diesen Vorgang unterstützt. Die im Bereich der Ausström-Beruhigungsdrossel 5.1 und des Zwischenrings 27 vorgesehene Erweiterung 15 als Übergang vom Ventilgehäuse 1 zum Abströmstutzen 6 vergrößert den abströmseitigen Querschnitt des Ventilgehäuses 1 und stellt den Übergang zum Abströmstutzen 6 her, der beispielsweise mittels der Schweißnaht 16 direkt angeschweißt ist. Die Gleichmäßigkeit des Abströmens wird deutlich verbessert, wenn ein konusförmig in das Innere des Hohlzylinders 45 weisender Strömungsleitkörper 29 am verschlossenen abströmseitigen Ende der verlängerten Steuerbuchse 2 eingesetzt ist.

Die folgende Tabelle zeigt ein gerechnetes Beispiel für den Druckabbau in einem Druckreduzierventil mit einer regelbaren Vorstufe, drei Regelstufen und einer geregelten Ausströmstufe. Dabei wurde die Druckreduktion von Wasser angenommen, das mit einem Eingangsdruck von 30 bar bei einer Temperatur von 330 K in das Ventil einströmt. Der Druckabbau geschieht bis in die Nähe von 1 bar, wobei die Druckminima, die in den Drosselöffnungen auftreten, diesen Druck deutlich unterschreiten können. Dies liegt im wesentlichen daran, daß der Druckabbau über Strömungsbeschleunigung und Strömungsverzögerung in Drosselbohrungen erfolgt und der sich dort einstellende dynamische Druck einschließlich der Einströmverluste den statischen Druck erheblich verringert. Um Kavitationen zu vermeiden, darf dabei der verbleibende statische Druck den bei der betreffenden Temperatur des Fluids herrschenden Sättigungsdruck nicht unterschreiten. Im Beispiel wurde Wasser mit einer Temperatur von 330 K angenommen; dabei liegt der Sättigungsdruck bei 0,176 bar.

Tabelle 1

Druckabbau in einem Druckreduzierventil mit
— geregelter Vorstufe I
— geregelten Druckreduzierstufen II, III, IV
— geregelter Ausströmstufe V (konventionell) bzw.
— geregelter Ausströmstufe $V_a$, $V_b$ (nach der Erfindung)

| | $P_{vor}$ (bar) | $P_{dyn}$ (bar) | $P_{min}$ (bar) | $P_{nach}$ (bar) |
|---|---|---|---|---|
| I | 30,00 | 26,70 | 3,30 | 10,24 |
| II | 10,24 | 8,70 | 1,54 | 4,59 |
| III | 4,59 | 3,72 | 0,87 | 2,17 |
| IV | 2,17 | 1,41 | 0,76 | 1,25 |
| V | 1,25 | 1,41 | ≪0,176 | — |
| bzw. | | | | |
| $V_a$, $V_b$ | 1,25 | 1,41:4 | 0,90 | 1,02 |
| | | | (>0,176) | |

Diese Tabelle zeigt, daß die konventionelle Ausströmstufe unter diesen Verhältnissen mit Sicherheit zur Kavitation führt, da der Druck im Bereich der Lochdrossel-Bohrungen den Sättigungsdruck unterschreitet. Um dem abzuhelfen gilt es daher durch Vergrößerung der druchströmten Querschnittsflächen der Drosselbohrungen die Strömungsgeschwindigkeit so herabzusetzen, daß der dynamische Druck in Grenzen bleibt. Dem steht jedoch entgegen, daß bei vorgegebener Hubhöhe nicht beliebig viele Bohrungen untergebracht werden können, zumal aus Festigkeitsgründen noch hinreichende Stege zwischen den Bohrungen verbleiben müssen. Im Beispiel wurden daher die Drosselstrecken der Ausströmstufe etwa gleich angesetzt; unter diesen Umständen unterschreitet der minimale Druck im Bereich der Drossel-Bohrungen der Ausströmdrossel die Sättigungsgrenze, das gefürchtete Ausdampfen mit der Blasenbildung setzt ein, das Ventil kann nicht mehr geräuscharm und ohne Gefahr einer Beschädigung durch Kavitation arbeiten.

Die letzte Zeile der Tabelle 1 zeigt die Wirkung der erfindungsgemäßen Verdoppelung des Strömungsquerschnitts in der geregelten Ausströmdrosselstufe. Der minimale Druck bleibt oberhalb des Sättigungsdruckes, ein Ausdampfen kann nicht mehr eintreten. Dies ist eine Folge der Halbierung der Strömungsgeschwindigkeit in den Drosselstufen, die ein Absenken des dynamischen Druckes auf ein Viertel des Wertes, verglichen mit der konventionellen Ausströmstufe, zur Folge hat. Bei den auftretenden Strömungsgeschwindigkeiten ist darüber hinaus eine Vergleichmäßigung der Strömung zu erwarten, die dann besonders zum Tragen kommt, wenn die Drosselbohrungen der Ausströmdrosselstufe ebenfalls zentralsymmetrisch zur Achse des hohlzylindrischen Drosselorgans vorgesehen werden.

Um den erreichbaren Enddruck eines Drosselorgans für strömende Fluide näher an den Siedepunkt des Fluids heranlegen zu können, bedarf es einer wesentlichen Verringerung der Strömungsgeschwindigkeit in der Austrittsstufe. Dieser Verringerung der Strömungsgeschwindigkeit und damit der Verringerung des dynamischen Druckes des strömenden Fluids sind jedoch durch die begrenzte Hubhöhe und die durch die bereits erwähnten Festigkeitsprobleme Grenzen gesetzt. Mit der erfindungsgemäßen Austrittsstufe gelingt es jedoch mit einfachen Mitteln den Strömungsquerschnitt bei gegebenem Hub zu verdoppeln. Dies geschieht dadurch, daß das strömende Fluid auf zwei parallelgeschaltete Ausströmwege, nämlich die stromaufwärts gelegene Ausströmkammer und die stromabwärts gelegene Ausströmkammer verteilt wird. Um die Regelbarkeit zu erreichen, wird dabei von dem hohlzylinderförmigen Drosselorgan der Eintrittsschlitz der stromaufwärts gelegenen Ausströmkammer über in dem Drosselorgan vorhandene Drosselöffnungen die erste Ausström-Lochdrossel freigegeben, während die Einströmöffnung der stromabwärts gelegenen Ausströmkammer eine eigene, die zweite Ausström-Lochdrossel besitzt, die vom unteren Ende des hohlzylinderförmigen Drosselorgans entsprechend der Anhebung innerhalb des Hubes in gleicher Weise freigegeben wird wie die Einströmung in die stromaufwärts gelegene. Bei der Anwendung von mit dem Hub steigenden Drosselöffnungsquerschnitten muß die Zu- bzw. Abnahme der Querschnitte dieser beiden Drosseln gegensinnig gerichtet sein. Dies bedeutet, daß z. B. die Drosselöffnungen mit dem geringsten Querschnitt bei der ersten Ausström-Lochdrossel des hohlzylinderförmigen Drosselorgans stromaufwärts, die mit dem größten Querschnitt stromabwärts angeordnet sind. Bei der zweiten Ausström-Lochdrossel befinden sich — wiederum in Strömungsrichtung gesehen — die Drosselöffnungen mit dem kleinsten Querschnitt stromabwärts, während die mit dem größten Querschnitt stromaufwärts, also nahe dem Zwischenring angeordnet sind. auf diese Art und Weise wird erreicht, daß beim Anheben des hohlzylinderförmigen Drosselorgans immer zuerst die Drosselöffnungen mit den kleinsten Querschnitten freigegeben werden und bei weiterem Anheben die Drosselöffnungen mit steigendem Querschnitt folgen. Werden andere Ventil-Kennlinien gewünscht, kann naturgemäß auch der Drosselquerschnitt über die gesamte Hubhöhe konstant gehalten werden, kann die Querschnittszunahme in umgekehrter Richtung erfolgen, oder es können Zahl und Anordnung der Drosselöffnungen in Abhängigkeit der Hubhöhe variiert werden.

Besonders vorteilhaft ist dabei eine seitlich versetzte Anordnung der Drosselöffnungen so, daß sich die Drosselöffnungen geringfügig überlappen. Durch diese Maßnahme läßt sich ein ausgeglichener stetiger Verlauf der Drossel-Kennlinie erreichen.

Die im Bereich der stromaufwärts gelegenen Ausströmkammer vorgesehene Erweiterung des Querschnitts des Außengehäuses und der Übergang in den Abströmstutzen berücksichtigt die Zunahme des Durchflusses durch die stromabwärts gelegene Ausströmkammer und verhindert eine störende Turbulenz in diesem Bereich. Gleichzeitig wird die Strömungsgeschwindigkeit in Grenzen gehalten, so daß auch der dynamische Druck im Bereich dieses Überganges keine zu hohen Werte annehmen kann. Einer Absenkung des Enddruckes des ausgeströmten Fluids bis in unmittelbare Nähe des Sättigungsdruckes bei der vorgegebenen Temperatur stehen von dieser Seite her keine Hindernisse entgegen. Die rinnenförmige Ausnehmung am stromabwärtigen Ende des Außengehäuses trägt zur Glättung der Strömung bei und leitet die Strömung zur äußeren Wand. Ein entsprechendes Anstellen der Winkel der Achsen der Drosselöffnungen der Beruhigungslochdrossel kann diese Strömungsführung günstig beeinflussen.

**Patentansprüche**

1. Ausströmstufe mit axialer Zu- und radialer Abströmung für ein Drosselventil, insbesondere für ein Druckreduzierventil, mit einem in einem Ventilgehäuse (1) angeordneten axialen Drosselschieber (3), der durch seine axiale Hubbewegung die Drosselung regelt, wobei der über einen Schaft (31) mit dem Ventilantrieb verbundene Drosselschieber (3) mit einem Dichtkegel (33), mit einer zentralen Drosselschiebersäule (35) mit Drosselkammern (35.1, 35.2) und mit einer Lochdrosselbereiche (36.1, 36.2) aufweisenden Drosselsäulenbuchse (36) versehen ist, wobei die Innenwand einer im Ventilgehäuse (1) angeordneten Steuerbuchse (2) die Laufbuchse für den Drosselschieber (3) bildet, dadurch gekennzeichnet, daß in der Wandung der Steuerbuchse (2) nahe dem mit einer Bodenplatte (28) verschlossenen, abströmseitigen Ende zwei etwa gleich große, durch einen Zwischenring (27) voneinander getrennte, zylinderringförmige Ausströmkammern (26.1, 26.2) vorgesehen sind, deren Außenwandungen als an sich bekannte Ausström-Beruhigungsdrosseln (5.1, 5.2) ausgebildet sind, wobei die Innenwandung der stromaufwärtigen Ausströmkammer (26.1) nach innen der Hubhöhe entsprechend geöffnet ist und wobei die Innenwandung der stromabwärtigen Ausströmkammer (26.2) mit einer der Hubhöhe entsprechenden Ausström-Lochdrossel (44) versehen ist, und daß das abströmseitige Ende des Drosselschiebers (3) mit einem eine zuströmseitig angeordnete Überström-Lochdrossel (46) aufweisenden Hohlzylinder (45) verlängert, ein hohlzylindrisches Drosselorgan (4) bildet, das an seinem offenen Ende (42) einen der Hubhöhe entsprechenden Abstand eine der ersten Ausström-Lochdrossel (44) entsprechende zweite Ausström-Lochdrossel (43) aufweist, derart, daß bei der axialen Verschiebung des Drosselschiebers (3) in Offenstellung die zweite Ausström-Lochdrossel (43) des Drosselorgans (4) den Einlaß für die stromaufwärtige Ausströmkammer (26.1) bildet und die Unterkante des freien Endes (42) des Drosselorgans (4) die erste Ausström-Lochdrossel (44) der stromabwärtigen Ausströmkammer (26.2) freigibt, wobei die innenliegende Oberkante des Zwischenrings (27) und die untenliegende Außenkante des Drosselorgans (4) die Steuerkanten dafür bilden.

2. Ausströmstufe nach Anspruch 1, dadurch gekennzeichnet, daß die Drosselöffnungen der Überström-Lochdrossel (46) über einen der Hubhöhe der Drosselschiebersäule (3) und somit des hohlzylindrischen Drosselorgans (4) entsprechenden Zylinderring zentralsymmetrisch zur Achse dieses hohlzylindrischen Drosselorgans (4) verteilt sind.

3. Ausströmstufe nach Anspruch 1 oder 2, dadurch gekennzeichnet, daß die Querschnitte der Drosselöffnungen der ersten Ausström-Lochdrossel (44) und der ihr entsprechenden zweiten Ausström-Lochdrossel (43) des hohlzylindrischen Drosselorgans (4) gegenläufig und die Querschnitte der Drosselöffnung der Überström-Lochdrossel (46) und der zweiten Ausström-Lochdrossel (43) des hohlzylindrischen Drosselorgans (4) gleichsinnig zunehmen.

4. Ausströmstufe nach Anspruch 2 oder 3, dadurch gekennzeichnet, daß der Übergang der in der Steuerbuchse (2) abströmseitig letzten peripheren Überströmkammer (24.2) zur von der Verlängerung der Steuerbuchse (2) gebildeten Laufbuchse für das hohlzylindrische Drosselorgan (4) die dessen Überström-Lochdrossel (46) zugeordnete Steuerkante (22.3) bildet.

5. Ausströmstufe nach Anspruch 1 sowie einem oder mehreren der Ansprüche 2 bis 4, dadurch gekennzeichnet, daß die axiale Erstreckung der Innenwand des Zwischenrings (27) mindestens gleich der Hubhöhe der Drosselkammersäule (3) ist.

6. Ausströmstufe nach einem oder mehreren der vorstehenden Ansprüche 1 bis 5, dadurch gekennzeichnet, daß das Ventilgehäuse (1) an seinem stromabwärtigen, außerhalb der abströmseitigen Ausström-Beruhigungslochdrossel (5.1) liegenden Ende eine umlaufende Rinne (14) aufweist.

7. Ausströmstufe nach einem oder mehreren der vorstehenden Ansprüche 1 bis 6, dadurch gekennzeichnet, daß das in den Abströmstutzen (6) übergehende Ventilgehäuse (1) im Bereich der stromaufwärtigen Ausströmkammer (26.1) der Steuerbuchse (2) und des Zwischenrings (27) ein seinen Querschnitt erweiterndes Übergangsstück (15) aufweist.

8. Ausströmstufe nach Anspruch 7, dadurch gekennzeichnet, daß das den Querschnitt des Ventilgehäuses (1) erweiternde Übergangsstück (15) eine Steigung von 10° bis 30°, vorzugsweise von 15° bis 20° aufweist.

9. Ausströmstufe nach Anspruch 8, dadurch gekennzeichnet, daß das Übergangsstück (15) den Querschnitt des Ventilgehäuses (1) um 35% bis 60%, vorzugsweise um etwa 45% vergrößert.

10. Ausströmstufe nach einem oder mehreren der vorstehenden Ansprüche 1 bis 9, dadurch gekennzeichnet, daß der am stromabwärtigen Ende der Steuerbuchse (2) angeordnete Boden (28) einen kegelförmig in das Innere des hohlzylindrischen Drosselorgans (4) gerichteten Strömungsleitkörper (29) aufweist.

11. Ausströmstufe nach Anspruch 10, dadurch gekennzeichnet, daß die Achse des Strömungsleitkörpers (29) mit der Achse der Steuerbuchse (2) zusammenfällt.

**Claims**

1. Outlet for a throttling valve with axial inlet and radial outlet, particularly for a pressure-reducing valve, comprising an axial throttle slide (3) controlling the throttling by means of its axial lifting stroke, the throttle slide (3) being connected over a shaft (31) to the valve drive and being provided with a sealing cone (33), with a central throttle slide column (35) having throttle chambers (35.1, 35.2), and with a throttle column bushing (36) exhibiting hole-throttling areas (36.1, 36.2), whereby the interior wall of a control bushing (2) arranged within the valve housing (1) represents the liner bushing for the throttle slide (3) characterized by that within the walls of the control bushing (2), near to the downstream end being closed with a bottom plate (28) two cylindrical outlet chambers (26.1, 26.2) of about the same size being separated from each other by an intermediate ring (27) are provided, the outer walls of said outlet chambers being designed as principally known outlet calming throttles (5.1, 5.2), whereby the interior wall of the upstream outlet chamber (26.1) is open inward corresponding to the lift stroke and whereby the interior wall of the downstream outlet chamber (26.2) is provided with an outlet hole throttle (44) corresponding to the lift stroke and that the downstream end of the throttle slide (3), extended by a hollow cylinder (45) provided with an upstream by-pass hole throttle (46), forms a hollow-cylindrical throttle unit (4) exhibiting at its open end (42) in a distance corresponding to the lift stroke a second outlet hole throttle (43) corresponding to the first outlet hole throttle (44) such that, when the throttle slide (3) is displaced axially to open position, the second outlet hole throttle (43) of the throttle unit (4) forms the inlet for the upstream outlet chamber (26.1) and the lower edge of the free end (42) of the throttle unit (4) releases the first outlet chamber (26.2), whereby the interior upper edge of the intermediate ring (27) and the downward outside edge of the throttle unit (4) form the control edges.

2. Outlet according to claim 1, characterized by that the throttle openings of the by-pass hole throttle (46) are distributed over a cylindrical ring corresponding to the lift stroke of the throttle slide column (3) and thus of the hollow-cylindrical throttle unit (4), centrally symmetrical to the axis of said hollow-cylindrical throttle unit (4).

3. Outlet according to claim 1 or 2, characterized by that the cross sections of the throttle openings of the first outlet hole throttle (44) and of the corresponding second outlet hole throttle (43) of the hollow-cylindrical throttle unit (4) increase in opposite sense and that the cross sections of the throttle opening of the by-pass hole throttle (46) and of the second outlet hole throttle (43) of the hollow-cylindrical throttle unit (4) increase in the same sense.

4. Outlet according to claim 2 or 3, characterized by that the transition of the peripheral by-pass chamber (24.2) being the last in the downstream sequence in the control bushing (2) to the liner bushing for the hollow-cylindrical throttle unit (4) being formed by the extension of the control bushing (2) forms the control edge (22.3) assigned to the by-pass hole throttle (46) of said throttle unit (4).

5. Outlet according to claim 1 and one or more of the claims 2 to 4, characterized by that the axial extension of the interior wall of the intermediate ring (27) is at least equal to the lift stroke of the throttle chamber column (3).

6. Outlet according to one or more of the preceding claims, characterized by that the valve housing (1) is provided with a circular groove (14) at its downstream end outside the downstream outlet calming throttle (5.1).

7. Outlet according to one or more of the preceding claims, characterized by that the valve housing (1) passing over into the outlet connection (6) is provided near the upstream outlet chamber (26.1) of the control bushing (2) and of the intermediate ring (27) with a transition piece (15) increasing its cross section.

8. Outlet according to claim 7, characterized by that the transition piece (15) increasing the cross section of the valve housing (1) exhibits a slope of 10° to 30°, preferably of 15° to 20°.

9. Outlet according to claim 8, characterized by that the transition piece (15) increases the cross section of the valve housing (1) by 35% to 60%, preferably by approximately 45%.

10. Outlet according to one or more of the preceding claims 1 to 9, characterized by that the bottom (28) arranged at the downstream end of the control bushing (2) is provided with a flow-guiding part (29) extending conically into the interior of the hollow-cylindrical throttle unit (4).

11. Outlet according to claim 10, characterized by that the axis of the flow-guiding part (29) coincides with the axis of the control bushing (2).

## Revendications

1. Sortie pour vanne d'étranglement, notamment destinée à un réducteur de pression, pourvue d'un débouché axial et d'un autre radial, du genre comportant un tiroir d'étranglement (3) disposé axialement dans un corps de vanne et dont le déplacement axial détermine d'étranglement, ce tiroir (3) qui comporte une partie (33) étant rendu solidaire de la commande de la vanne par un manchon (31), comprend encore une colonne centrale (35) munie de chambres d'étranglement (35.1, 35.2), ainsi qu'une douille (36) munie de zones à trous d'étranglement (36.1, 36.2), tandis que la paroi intérieure d'un fourreau (2) disposé dans le corps (1) constitue guidage pour ledit tiroir (3), caractérisé en ce que dans la paroi du fourreau (2) à proximité de son extrémité fermée par un fond (28), il est prévu deux chambres d'écoulement (26.1, 26.2) en forme d'anneau cylindrique à peu près de mêmes dimensions et séparées l'une de l'autre par une collerette intermédiaire (27) dont les parois extérieures comportent des zones percées (5.1, 5.2) en soi connues, la paroi intérieure de la chambre amont (26.1) étant ouverte vers l'intérieur suivant une hauteur correspondant à la translation, la paroi intérieure de la chambre aval (26.2) étant munie d'une zone trouée (44) de hauteur correspondant aussi à la translation, et en ce que le tiroir (3), qui se prolonge par un cylindre creux (45) présentant en amont une zone percée (46), forme un organe d'étranglement (4) en forme de cylindre creux, lequel présente à son extrémité ouverte (42) une seconde zone percée (43) de hauteur correspondant à la translation et à celle de la zone (44) de façon telle qu'après le déplacement axial du tiroir d'étranglement (3) à sa position ouverte, la seconde zone (43) de l'organe d'étranglement (4) constitue l'ouverture d'admission de la chambre amont (26.1) et que le rebord inférieur de l'extrémité libre (42) de l'organe d'étranglement (4) libère la première zone (44) de la chambre d'écoulement aval (26.2), tandis que le rebord supérieur intérieur de la collerette intermédiaire (27) et la face extérieure basse de l'organe d'étranglement (4) constituent à cet effet éléments de guidage.

2. Sortie suivant la revendication 1, caractérisée en ce que les ouvertures d'étranglement de la zone percée amont (46) sont réparties symétriquement par rapport à l'axe de l'organe d'étranglement (4) en forme de cylindre creux sur une partie tubulaire correspondant à la translation du tiroir d'étranglement (3) et aussi à celle dudit organe d'étranglement (4) en forme de cylindre creux.

3. Sortie suivant la revendication 1 ou 2, caractérisée en ce que les sections transversales des ouvertures d'étranglement de la première zone (44) et de la seconde (43) qui lui correspond sur l'organe d'étranglement en forme de cylindre creux (4), et les sections transversales des ouvertures d'étranglement de la zone percée (46) et de la seconde zone trouée (43) de l'organe d'étranglement en forme de cylindre creux (4) croissent de façon similaire dans le sens de la translation.

4. Sortie suivant l'une quelconque des revendications 2 et 3, caractérisée en ce que le passage de la dernière chambre aval périphérique (24.2) du fourreau (2) forme avec le guidage de l'organe d'étranglement (4) constitué par l'extension du fourreau (2), un élément (22.3) coordonné avec la zone percée (46).

5. Sortie suivant l'une quelconque des revendications 1 à 4, caractérisée en ce que l'extension axiale de la paroi intérieure de la collerette intermédiaire (27) est au moins égale à la translation du tiroir (3).

6. Sortie suivant l'une quelconque des revendications 1 à 5, caractérisée en ce que le corps de vanne (1) comporte à son extrémité aval une gouttière périphérique (14) qui entoure la zone percée amont (51).

7. Sortie suivant l'une quelconque des revendications 1 à 6, caractérisée en ce que le corps de vanne (1) se transformant en tubulure d'écoulement (6) comporte, disposée au niveau de la chambre d'étranglement amont (26.1) du fourreau (2) et de la collerette intermédiaire (27), une pièce intermédiaire (15) élargissant sa section.

8. Sortie suivant la revendication 7, caractérisée en ce que la pièce intermédiaire (15) élargissant la section du corps de vanne (1) présente une conicité de 10 à 30°, préférablement de 15 à 20°.

9. Sortie suivant la revendication 8, caractérisée en ce que la pièce intermédiaire (15) augmente la section du corps de vanne (1) d'environ 35 à 60%, préférablement d'environ 45%.

10. Sortie suivant l'une ou plusieurs des revendications 1 à 9, caractérisée en ce que le fond (28) disposé au niveau de l'extrémité aval du fourreau (2) comporte une pièce de guidage conique (29) pénétrant à l'intérieur de l'organe d'étranglement en forme de cylindre creux (4).

11. Sortie suivant la revendication 10, caractérisée en ce que l'axe de la pièce de guidage (29) coïncide avec l'axe du fourreau (2).

Fig.1